# EUROPEAN PATENT SPECIFICATION

(11) **EP 3 084 387 B1**
(45) Date of publication and mention of the grant of the patent: **19.09.2018**
(21) Application number: 14830654.1
(22) Date of filing: 15.12.2014
(51) Int. Cl.: G01D 5/245

(54) **METHOD FOR CONTROLLING THE QUALITY OF A TYRE FOR VEHICLE WHEELS**
VERFAHREN ZUR QUALITÄTSPRÜFUNG EINES REIFENS
PROCÉDÉ DE CONTROLE QUALITÉ D'UN PNEU POUR ROUES DE VÉHICULES

(30) Priority: 17.12.2013 IT MI20132110
(43) Date of publication of application: 26.10.2016
(73) Proprietor: Pirelli Tyre S.p.A., 20126 Milano (IT)
(72) Inventor: BOFFA, Vincenzo, I-20126 Milano (IT); BALINI, Alfredo, I-20126 Milano (IT); REGOLI, Fabio, I-40131 Bologna (IT)
(74) Representative: Porta, Checcacci & Associati S.p.A
(86) International application number: PCT/IB2014/066916
(87) International publication number: WO 2015/092651

(56) References cited:
- EP-A1- 2 211 161
- EP-A2- 1 087 220
- EP-A2- 1 714 791
- US-A1- 2004 103 974
- Anonymous: "Barcode - Wikipedia", , 6 December 2013 (2013-12-06), XP055426330, Retrieved from the Internet: URL:https://en.wikipedia.org/w/index.php?t itle=Barcode&oldid=584791320 [retrieved on 2017-11-17]

## Description

The invention relates to a method for controlling the quality of a tyre for vehicle wheels.

The invention also relates to a tyre for vehicle wheels and a plant for producing tyres for vehicle wheels.

A tyre for vehicle wheels typically comprises a carcass structure, shaped according to a substantially toroidal configuration, comprising at least one carcass ply having respectively opposite end portions. The latter are engaged with respective annular anchoring structures, each of them normally formed from at least one substantially circumferential annular insert called "bead core" on which at least one filling insert is generally applied, tapering radially going away from the rotation axis. The annular anchoring structures are arranged in areas usually identified by the term "beads". The beads have an internal diameter substantially corresponding to a so-called "fitting-diameter" of the tyre on a respective assembly rim. The tyre also comprises a crown structure comprising at least one belt strip arranged in a position radially outside the carcass ply with respect to the centre of the tyre and a tread band radially outside the belt strip. Longitudinal and transversal grooves are typically formed into the tread band, arranged to define a desired tread pattern. Between the tread band and the belt strip(s) there can be a so-called "under-layer" made of elastomeric material with suitable properties to ensure a stable connection of the belt strip(s) with the tread band itself. The tyre also comprises a pair of so-called sidewalls made from elastomeric material that represent the axially outer surfaces of the tyre, with respect to a middle plane perpendicular to the rotation axis of the tyre itself. For example, the sidewalls represent the axially outer surfaces with respect to the annular anchoring structures, to the carcass ply(-ies), to the belt strip(s) and possibly to at least one tread band portion. In "tubeless" tyres, there is, in a radially inner position with respect to the carcass ply, at least one layer of elastomeric material, usually called "liner", having air-tightness characteristics and generally extending from one of the beads to the other.

The production cycles of a tyre foresee that, after a building process in which the various structural components of the tyre itself are made and/or assembled, the built green tyres are transferred into a moulding and vulcanizing line where a moulding and vulcanization process is carried out, adapted to define the structure of the tyre according to a desired geometry and tread pattern.

By "elastomeric material" it is meant to indicate a composition comprising at least one elastomeric polymer and at least one reinforcing filler. Preferably, such a composition also comprises additives like, for example, a cross-linking agent and/or a plasticizer. Thanks to the presence of the cross-linking agent, such a material can be cross-linked by heating, so as to form the final manufactured product.

By the term "green tyre" it is meant to indicate a tyre obtained from the building process and not yet moulded and vulcanized.

By the term "tyre" it is meant to indicate a finished tyre obtained from the building process and then moulded and vulcanized.

By the term "structural component" it is meant to indicate any component adapted to perform a function in the tyre, for example selected among: liner, under-liner, carcass ply(-ies), under-belt insert, belt strips whether crossed over one another or at zero degrees, attachment thin sheet for the tread band, tread band, bead core, bead filler, reinforcing inserts made from textile, metal or just elastomeric material, abrasion-proof insert, sidewall inserts.

By the term tyre "model" it is meant to indicate the overall geometric characteristics distinguishing a tyre, i.e. at least width of the tread band, height of the sidewalls, fitting diameter.

The terms "axial", "axially", "radial", "radially", "circumferential" and "circumferentially" are used with reference to the tyre.

In particular, the terms "axial" and "axially" mean references/quantities arranged/measured or extending in a direction substantially parallel to the rotation axis of the tyre.

An element of the tyre is defined "radial" if it is arranged on a plane comprising the rotation axis thereof.

More generally, the terms "radial" and "radially" mean references/quantities arranged/measured or extending in a direction substantially perpendicular to the rotation axis of the tyre, in other words in a direction that intersects the rotation axis of the tyre and lies in a plane comprising such a rotation axis.

The terms "circumferential" and "circumferentially" mean references/quantities arranged/measured or extending in a direction parallel to a direction identified at any point of the tyre along the tangent to the tyre in that point and perpendicular to the axial direction and to the radial direction.

Sidewalls of a tyre mean the axially outer surfaces thereof.

The tyres currently in production typically have markings on the sidewalls like, for example, barcodes, letters, numbers, symbols, aesthetic decorations and the like, which can provide information such as: unique identifier of the tyre; size designation with load and speed indications, service characteristics, homologation, tyre type (R/F, CP, SST, M+S, P, XL), manufacturer trademark, trade name of the model and the like.

EP 1 087 220 describes an apparatus and a method for inspecting a tyre. The appartatus comprises: rotation means that rotate a tyre having a specific point and a mark that indicates a reference point; a sensor, which detects that the mark has been positioned in a predetermined direction with respect to the centre of the tyre; detection means that detect a position of the specific point; and a controller that controls the rotation means, interrupts the rotation of the tyre when the mark has been positioned in the predetermined direction with respect to the centre of the tyre, ensures that the detection means detect the position of the specific point and detects an angle in the clockwise direction, between a direction that joins the detected position of the specific point and the centre of the tyre, and the predetermined direction.

EP 2 211 161 A1 discloses a wheel diagnosis system. EP 1 714 791 A2 dislcoses a ribbon identification system using radial bar code. US 2004/103974 A1 discloses a tyre having a bar code label located midway between the bead and the shoulder of the tyre.

Barcodes are described in the Internet by Wikipedia (see the entry "barcode" at the URL https://en.wikipedia.org/w/index.php?title=Barcode&oldid=584791320, retrieved on 2017-11-17).

In a process for producing tyres for vehicle wheels, the Applicant perceived the need to have, during a finishing and quality control step of the tyres produced, a position reference on the sidewall of the tyre to precisely and unambiguously define the position of possible detected production defects and anomalies.

The Applicant observed that the use of markings already existing in the tyres, of the type listed above or as described in EP 1 087 220, as position reference to carry out an automated quality control of the tyres produced in a plant, can involve various problems. For example, such markings change (for example, in terms of shape, size and/or position) as the models of tyre change. The use of such markings as position reference for automated quality control would therefore require modification/adaptation of the reference locating devices as a function of the models of tyre produced inside the production plant. This makes it complex to make an industrial-scale automated quality control system.

The Applicant also observed that the two sidewalls of the same tyre have different markings. Therefore, it is not possible to define unique position references on the sidewalls of the tyre for detections made on both sidewalls of the same tyre.

The Applicant perceived that the problems outlined above can be overcome through the insertion of an additional marking on at least one sidewall of the tyre, formed by a specific mark, which is very simple and easily made on every tyre model, comprising a plurality of lines.

The Applicant finally found that by making said mark by providing a first line and a second radial line, it is possible to use a control method that detects a position reference on the sidewall of said tyre through the detection of the first line and of the second radial line, so that for each defect detected through an inspection, it is positioned as a function of the radial line used as position reference.

In accordance with a first aspect thereof, the invention relates to a method for controlling the quality of a tyre for vehicle wheels according to claim 1.

The Applicant considers that, by using such additional marking as universal position reference, it is possible to make more easily an industrial-scale automated quality control system for controlling quality of tyres produced in any production plant, such a marking being able to be used on all tyres, irrespective of the tyre model produced each time by the aforementioned plant. The Applicant also considers that such a solution makes it possible to use a single methodology and a single device for locating the position reference, irrespective of the model of the tyre each time analysed, and therefore to carry out the quality control of tyres produced in a plant with reliability and repeatability.

In accordance with a second aspect thereof, the invention relates to a tyre for vehicle wheels having a marking in at least one sidewall, according to claim 3.

The Applicant considers that the use of an additional marking formed by a specific mark, comprising a first line and a second radial line, makes it possible to industrialise the quality control of tyres at the same time limiting both the intervention to be made on the moulds of a moulding and vulcanization line for the insertion of such a marking and the space occupied by such a marking in the sidewall of the tyre. Such a marking is, indeed, simple to make, little invasive and can be sufficiently miniaturised without compromising its detectability by automatic detection systems. This is important both to limit the production costs and to limit the occupied space added to the sidewall of the tyre, already full of markings. Such a marking comprising a radial line is also suitable for being used with an automatic circumferential detection system, in other words adapted to inspect the surface of the sidewall of a tyre through a circumferential exploration. The radial development of the marking also makes it possible to precisely define positions of defects detected in tyres with respect to the marking in terms of angular distances. This advantageously makes it possible to provide quality reports with homogeneous data and also comparable between different tyre models. In addition, the use of a radial line flanked by at least one further line makes the marking clearly distinguishable from possible linear marks already present on the tyre. The further line, preferably positioned at one side of the radial line, also acts as a warning for the marking detection systems to forewarn the position reference actualy consisting of the radial line.

In accordance with a third aspect thereof, the invention relates to a plant for producing tyres for vehicle wheels, according to claim 8.

The present invention in at least one of the aforementioned aspects can have at least one of the following preferred characteristics.

Preferably, the quality control of the tyre is carried out automatically.

The mark comprises a third line, said first line and said third line being respectively positioned at the two sides of the second radial line and being symmetrical to one another with respect to said second radial line.

The fact that the second radial line is flanked by two lateral lines, makes the marking even more clearly distinguishable from possible further marks already present on the tyre. The first and the third line, positioned at the two sides of the second radial line, act as a warning for the marking detection systems to forewarn the position reference actually consisting of the second radial line, both in the case of clockwise and anti-clockwise scanning, and make it easier for such systems to be automatically centred with respect to the radial line.

Preferably, the position of each detected production defect is determined in terms of angular distance with respect to said position reference. This advantageously makes it possible to provide quality reports with homogeneous and comparable data to carry out analyses, for example statistical, also between tyres of different models.

Preferably, locating said position reference, inspecting said tyre and determining said position of each production defect are carried out with reference to said sidewall of the tyre on which the marking is positioned.

In a preferred embodiment, the marking is on both the sidewalls of the tyre and locating said position reference, inspecting said tyre and determining said position of each production defect are carried out for both sidewalls, using the respective marking as position reference. The Applicant observes that the use of an additional universal marking on both the sidewalls of the tyre, preferably in the same radial and circumferential position, makes it possible to define two symmetrical position references between the two sidewalls of the same tyre.

Preferably, it is provided an exploration in the circumferential direction of the surface of said sidewall of the tyre, adapted to provide data representative of said surface.

More preferably, it is provided an exploration in the circumferential direction of the surface of both sidewalls of the tyre.

In a preferred embodiment, the data representative of said surface are in the form of an image.

Preferably, locating said position reference, inspecting said tyre and determining said position of each production defect are carried out through processing of said data representative of said surface.

Preferably, data relating to the detected production defects and to their position with respect to said position reference are provided in output.

In a preferred embodiment, said marking is on both sidewalls of the tyre.

Preferably, said marking is positioned on both sidewalls of the tyre so that the second radial line lies for the two sidewalls on two radial planes having at most an angular phase shift of less than about 2°.

More preferably, the marking is positioned on both sidewalls of the tyre so that the second radial line for the two sidewalls lies on the same radial plane.

Preferably, the marking is positioned on both sidewalls of the tyre so as to have substantially the same radial distance from the centre of the tyre.

Preferably, said first line is different from said second radial line.

Preferably, said first line differs from said second radial line in shape and/or size.

Preferably, the second radial line is substantially rectilinear.

Preferably, said first line is centred with respect to the middle of the second radial line.

In a preferred embodiment, said first line is an open polygonal chain substantially V shaped with vertex positioned towards the second radial line.

Preferably, said first line is an open curved line with convexity facing towards the second radial line.

In a preferred embodiment, said open curved line is substantially an arc of circle.

More preferably said open curved line is substantially a semi-circle.

Preferably, it is provided at least one building line of green tyres.

Preferably, it is provided a moulding and vulcanizing line of green tyres comprising a plurality of vulcanizers comprising respective moulds configured to imprint said marking on at least one sidewall of the tyres.

Preferably, said at least one workstation comprises a detection system configured to supply data representative of the surface of at least one sidewall of the tyres.

Preferably, the inspection device and the locating device are respectively configured to carry out the inspection of the tyres and to locate the position reference through the processing of the data representative of said surface provided by the detection system.

Preferably, said at least one workstation comprises an output device configured to supply in output data relating to said detected production defects and to their position with respect to said position reference.

Preferably, said detection system is configured to carry out a circumferential exploration of the surface of said at least one sidewall of each tyre.

Preferably, said detection system is configured to carry out a circumferential exploration of the surface of both sidewalls of each tyre.

Preferably, the detection system comprises a sensor and a lighting device.

Preferably, the sensor comprises a camera.

The sensor can be advantageously operatively associated with a robotized arm.

Preferably, said detection system comprises at least one moving device configured to carry out a relative rotation of each tyre with respect to the sensor and to the lighting device.

Preferably, said relative rotation is by at least 360°.

Preferably, said at least one building line of green tyres is configured to build green tyres according to different models.

Preferably, said moulds of the plurality of vulcanizers are configured so as to imprint said marking in the same position (circumferential and radial) for tyres of the same model.

Preferably, said moulds are configured to imprint said marking on said at least one sidewall of all the tyres produced in the plant, irrespective of the model.

Preferably, it is imprinted the same mark in terms of shape, irrespective of the model of the tyres.

Preferably, it is imprinted the same mark in terms of size, irrespective of the model of the tyres.

Preferably, said moulds are configured to imprint said same marking on both sidewalls of the tyres, so that the second radial line lies for the two sidewalls on two radial planes having at most an angular phase shift of less than about 2°.

Further characteristics and advantages of the present invention will be made clear from the following detailed description of some example embodiments thereof, given only as non-limiting examples, said description being made with reference to the attached drawings, in which:
- figure 1 schematically shows the sidewall of a tyre according to an embodiment of the invention;
- figure 2 schematically shows an enlarged portion of the sidewall of figure 1;
- figure 3 schematically shows the plane development of a marking for a tyre according to a first embodiment of the invention;
- figure 4 schematically shows the plane development of a marking for a tyre according to a variant of the embodiment of figure 3 out of the scope of the invention;
- figure 5 schematically shows the plane development of a marking for a tyre according to a second embodiment of the invention;
- figure 6 schematically shows the plane development of a marking for a tyre according to a third embodiment of the invention;
- figure 7 schematically shows the plane development of a marking for a tyre according to a fourth embodiment of the invention;
- figure 8 schematically shows two sidewalls of a tyre according to an embodiment of the invention;
- figure 9 schematically shows a workstation for the quality control of a tyre, according to an embodiment of the invention;
- figure 10 schematically shows a step of determining the position of a production defect with respect to a position reference according to an embodiment of the invention;
- figure 11 schematically shows a plant for producing tyres according to an embodiment of the invention.

In the following description, for illustrating the figures identical reference numerals are used to indicate constructive elements with the same function.

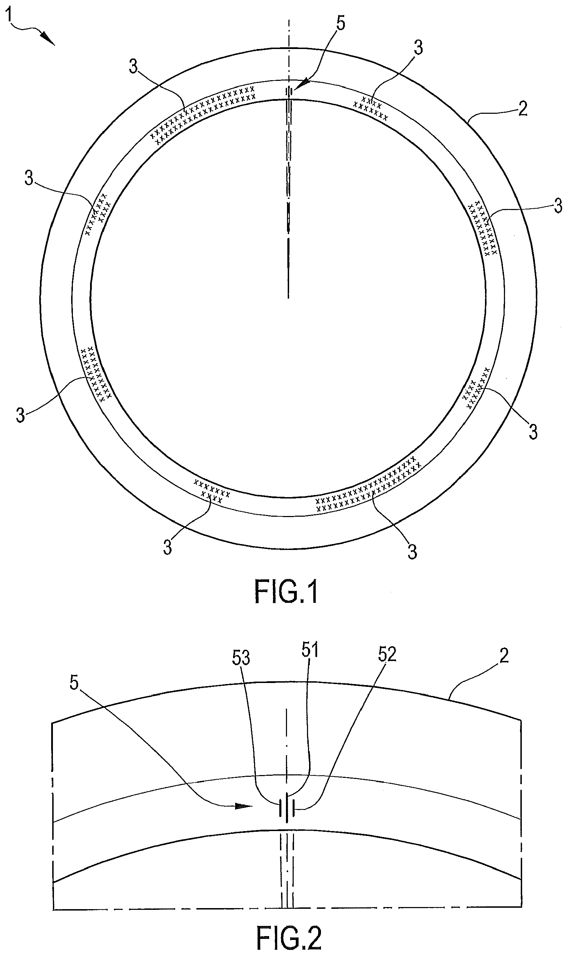

Figure 1 schematically shows a sidewall 2 of a tyre 1 for vehicle wheels according to an embodiment of the invention.

The sidewall 2 has a plurality of markings, generally indicated with reference numeral 3. Such markings can comprise, for example, barcodes, letters, numbers, symbols, aesthetic decorations and the like, which can provide information such as: unique tyre identifier; size designation with load and speed indications, service characteristics, homologation, tyre type (R/F, CP, SST, M+S, P, XL), manufacturer trademark, trade name of the model and the like.

According to the invention, the sidewall 2 also comprises a specific marking to be used as position reference, comprising a mark 5.

The mark 5 comprises at least one first line and a second radial line.

In an embodiment (shown in figures 1-3, 8 and 10), the mark 5 comprises a first line 53, a second radial line 51 and a third line 52. The first line 53 and the third line 52 are two lateral lines respectively positioned at the two sides of the central second radial line 51 and symmetrical to one another with respect to said central second radial line 51. The two lateral lines 52, 53 are radial (i.e. substantially rectilinear lines lying in a plane comprising the rotation axis of the tyre).

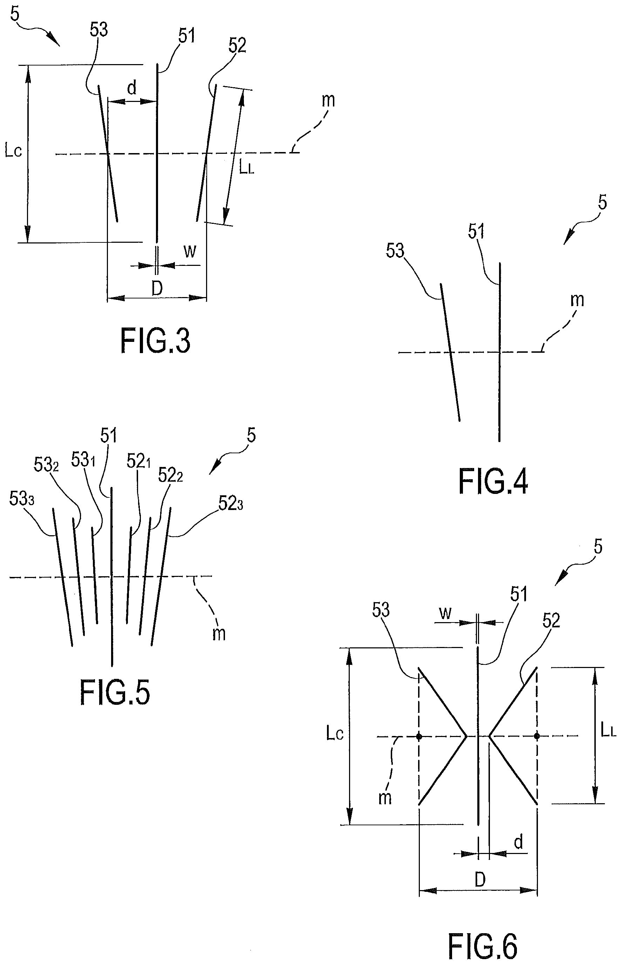

As shown in the plane development of figure 3, the two lateral lines 52, 53 are advantageously centred with respect to the middle line m of the central radial line 51.

The two lateral radial lines 52, 53 have a length L_{L} shorter than the length L_{C} of the central radial line 51.

Preferably, with reference to a plane development of the mark 5, the radial lateral lines 52, 53 have a length L_{L} such as to satisfy the following relationship: 2/5 ≤ L_{L}/L_{C} ≤ 4/5, preferably L_{L}/L_{C} approximately equal to 3/5.

Preferably, the length L_{C} of the central radial line 51 is at least about 5 mm.

Preferably, the length L_{C} of the central radial line 51 is less than or equal to about 25 mm.

Preferably, the central radial line 51 and the radial lateral lines 52, 53 have substantially the same width w. For example, the central radial line 51 and the radial lateral lines 52, 53 have a width w comprised between about 0.5mm and about 1.5mm (it should be observed that in the figures, for the sake of clarity of illustration, the symbol w representative of the width of the lines has only been represented for the central line 51).

The distance d, defined along the middle line m of the central radial line 51, between each of the two radial lateral lines 52, 53 and the central radial line 51, is preferably shorter than the length L_{C} of the central radial line. Preferably, 1/10 ≤ d/L_{C} ≤ 6/10; more preferably d/L_{C} is approximately equal to 4/10.

The mark 5 preferably has an overall extension D, along the middle line m of the central radial line 51, of at least 3 mm.

The mark 5 preferably has an overall extension D, along the middle line m of the central radial line 51, of less than or equal to 14 mm.

Figure 4 comprises the mark 5 according to a variant of the embodiment of figure 3 out of the scope of the invention. This variant is totally similar to that of figure 3 except for the fact that it comprises a single lateral line 53. Even if in the figures the lateral line 53 is shown on the left of the central radial line 51, there may be also the case of a single lateral line 52 to the right of the central radial line 51. As discussed in greater detail later on, this variant can for example be used in case of circumferential inspections of the surface of the tyre in a single direction (clockwise in the case of the variant with the lateral line on the left and anti-clockwise in the case of the variant with the lateral line on the right).

Figure 5 shows the mark 5 according to a second embodiment of the invention. In this embodiment, the mark 5 comprises a central radial line 51 and a plurality of radial lines 52ᵢ, 53ᵢ at the two sides of the central radial line, with 1<i≤n (in figure n=3), preferably n<5. The pluralities of radial lines 52ᵢ, 53ᵢ are symmetrical to one another with respect to the central radial line 51, they have a length shorter than the length of the central radial line 51 and increasing uniformly going away from the central radial line 51.

For the length of the central radial line 51 and of the most external lateral radial lines 52ₙ, 53ₙ and the width w of all of the lines reference is made to what is described above with reference to the first embodiment of figure 3.

Figure 6 shows the mark 5 according to a third embodiment of the invention. In this embodiment, the two lateral lines 52, 53 of the mark 5 are two open polygonal chains respectively at the two sides of the central radial line 51 and symmetrical to one another with respect to the central radial line 51.

In the example shown, the two open polygonal chains 52, 53 are substantially V-shaped with vertex positioned towards the central radial line, substantially at the middle line m of the central radial line 51.

Preferably, with reference to a plane development of the mark 5, the two open polygonal chains 52, 53 have maximum extension L_{L}, along a direction parallel to the central radial line 51, equal to or less than the length L_{C} of the central radial line.

Preferably, the two open polygonal chains 52, 53 have length L_{L} such as to satisfy the following relationship: 2/5 ≤ L_{L}/L_{C} ≤ 4/5, preferably L_{L}/L_{C} approximately equal to 3/5.

For the length L_{L} of the central radial line 51 reference is made to what has been described above with reference to the first embodiment of figure 3.

Preferably, the central radial line 51 and the two open polygonal chains 52, 53 have substantially the same width w. For example, the central radial line 51 and the two open polygonal chains 52, 53 have a width w comprised between about 0.5 and about 1.5mm.

The distance d, defined along the middle line m of the central radial line 51, between the vertices of the two open polygonal chains 52, 53 and the central radial line 51, is preferably less than the length L_{C} of the central radial line. Preferably, 1/10 ≤ d/L_{C} ≤ 4/10; more preferably d/L_{C} is approximately equal to 3/10.

The mark 5 preferably has a maximum extension D, along a direction parallel to the middle line m of the central radial line 51, of at least 5 mm.

The mark 5 preferably has a maximum extension D, along a direction parallel to the middle line m of the central radial line 51, of less than or equal to 16 mm.

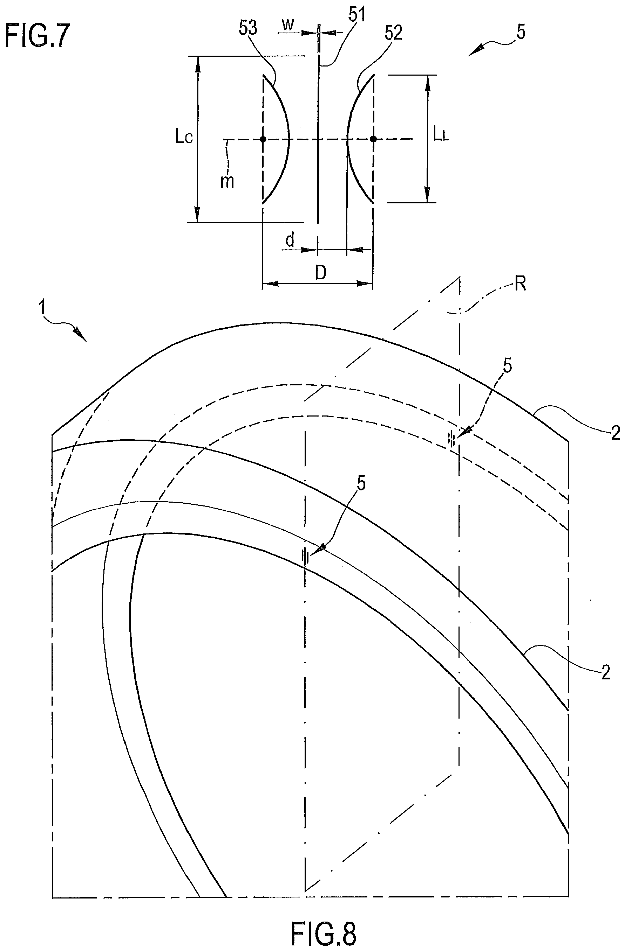

Figure 7 shows the mark 5 according to a fourth embodiment of the invention. In this embodiment, the two lateral lines 52, 53 are two open curved lines, respectively at the two sides of the central radial line 51 and symmetrical to one another with respect to the central radial line 51.

Advantageously, the two open curved lines 52, 53 have convexity facing towards the central radial line 51.

Advantageously, the two open curved lines 52, 53 are centred with respect to the middle line m of the central radial line 51.

The two open curved lines 52, 53 can be arcs of circle, for example two semi-circles.

Preferably, with reference to a plane development of the mark 5, the two open curved lines 52, 53 have maximum extension L_{L}, along a direction parallel to the central radial line 51, equal to or less than the length L_{C} of the central radial line.

Preferably, the two open curved lines 52, 53 have length L_{L} such as to satisfy the following relationship: 2/5 ≤ L_{L}/L_{C} ≤ 4/5, preferably L_{L}/L_{C} is approximately equal to 3/5.

For the length L_{L} of the central radial line 51 reference is made to what is described above with reference to the first embodiment of figure 3.

Preferably, the central radial line 51 and the two open curved lines 52, 53 have substantially the same width w. For example, the central radial line 51 and the two open curved lines 52, 53 have width w comprised between about 0.5mm and about 1.5mm.

The distance d, defined along the middle line m of the central radial line 51, between the vertices of the two open curved lines 52, 53 and the central radial line 51, is preferably less than the length L_{C} of the central radial line. Preferably, 1/10 ≤ d/L_{C} ≤ 4/10; more preferably d/L_{C} is approximately equal to 3/10.

The mark 5 preferably has a maximum extension D, along a direction parallel to the middle line m of the central radial line 51, of at least 5 mm.

The mark 5 preferably has a maximum extension D, along a direction parallel to the middle line m of the central radial line 51, of less than or equal to 16 mm.

It should be observed that even if in figure 4 a variant is shown in which there is a single lateral radial line 53, there is also disclosed the case in which the mark 5 comprises a plurality of lateral lines only to the left or to the right of the central radial line 51 (as variant of the embodiment of figure 5) and the cases in which the mark 5 comprises a single open polygonal chain or a single open curved line (to the left or to the right of the central radial line 51), respectively as variants of the embodiments of figures 6 and 7.

Figure 8 shows an embodiment in which the tyre 1 comprises the mark 5 on both the sidewalls 2.

This embodiment is particularly advantageous since it allows the mark 5 to be used as position reference on both the sidewalls 2 of the tyre 1.

It should be observed that even if in figure 8 the mark 5 is configured according to the embodiment of figure 3, the mark 5 can be made according to any one of the embodiments illustrated and described.

Preferably, the mark 5 is identical on both the sidewalls 2 of the tyre 1.

Preferably, the mark 5 is positioned on both the sidewalls of the tyre so that the central radial line 51 for the two sidewalls 2 lies on the same radial plane R (example shown in figure 8) or on two radial planes having at most an angular phase shift of less than about 2°. Preferably, the mark 5 is positioned on both the sidewalls 2 of the tyre 1 so as to have substantially the same radial distance from the centre of the tyre. These characteristics advantageously allow two mirror position references to be defined between the two sidewalls 2 of the same tyre 1. As discussed in greater detail hereafter, this can be particularly advantageous to make it possible to relate and compare data relative to the two sidewalls 2 of the tyre, for detections of defects carried out on both the sidewalls 2.

The tyre 1 comprising the mark 5 according to the invention has the advantage of providing a unique position reference minimising both the intervention to be carried out on the moulds of a moulding and vulcanization line of a production plant for the insertion of such a mark and the space occupied by it in the sidewalls of the tyres. Such a mark is indeed simple to make, not very invasive and can be sufficiently miniaturised without compromising its detectability by automatic detection systems. This is important both to limit the production costs and to limit the space taken up in the sidewalls of the tyres, already full of markings.

According to the invention, the mark 5 is used as reference to determine the position of production defects identified in a tyre produced in a production plant during a quality control.

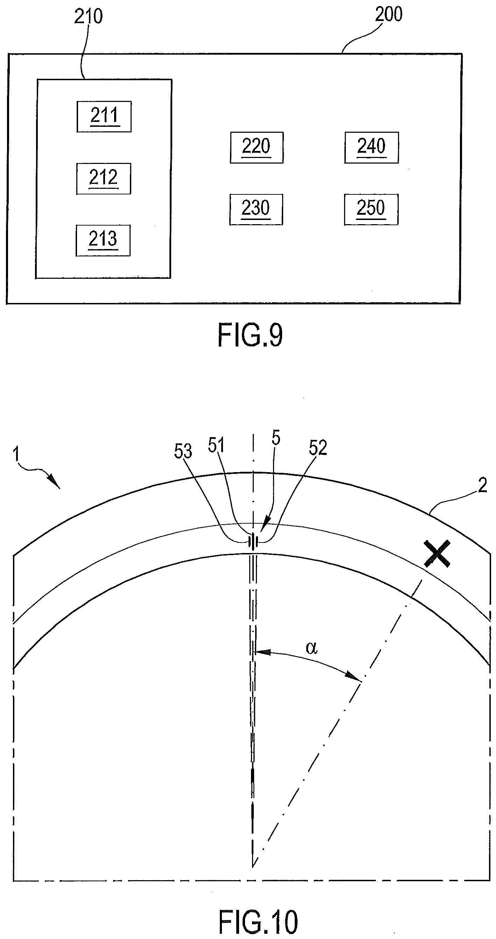

Figure 9 shows a workstation 200 for the quality control of a tyre comprising a detection system 210, a locating device 220, an inspection device 230, a positioning device 240 and an output device 250.

Even if in figure 9 the detection system 210, the locating device 220, the inspection device 230, the positioning device 240 and the output device 250 are as an example shown in a single workstation 200, they could also be arranged differently, for example in more than one workstation.

The detection system 210 advantageously comprises a sensor 211 and a moving device 213. Preferably, the detection system 210 also comprises a lighting device 212.

The moving device 213 is configured to carry out a relative rotation of the tyre with respect to the sensor 211 and to the lighting device 212. The rotation is carried out so as to allow a circumferential exploration (preferably by at least 360°) of the surface of a sidewall of the tyre and, preferably, of both the sidewalls. Preferably, the moving device 213 comprises a rotary support (not shown) for the tyre. Such a rotary support is advantageously configured to rotate the tyre about its rotation axis with respect to the sensor 211 and to the lighting device 212 and expose firstly one sidewall and then the opposite sidewall of the tyre.

The lighting device 212 can comprise a laser or LED source.

The sensor 211 and the lighting device 212 each comprise software and/or hardware and/or firmware elements configured so as to acquire, process and provide data representative of the surface of the sidewall/sidewalls of the tyre.

For example, the sensor can be a camera.

The sensor 211 and/or the lighting device 212 can be operatively associated with a robotized arm (not shown).

The locating device 220 advantageously comprises software and/or hardware and/or firmware elements configured so as to identify the mark 5 on the sidewall of the tyre and to locate in the central radial line 51 the position reference.

In a preferred embodiment of the type shown in figure 8, in which the mark 5 is imprinted on both the sidewalls 2 of the tyre, the locating device 220 is advantageously configured to identify the mark 5 on both the sidewalls 2 and locate in the respective central radial line 51 the corresponding position reference.

Advantageously, identifying the mark 5 and locating the position reference are carried out through analyses of the data provided by the sensor 211.

The inspection device 230 advantageously comprises software and/or hardware and/or firmware elements configured so as to inspect the tyre to search for possible production defects. Advantageously, the inspection is carried out through analyses of the data provided by the sensor 211.

The positioning device 240 advantageously comprises software and/or hardware and/or firmware elements configured so as to determine for the sidewall/sidewalls of the tyre the position of each production defect with respect to the respective located position reference. The position is advantageously determined by the positioning device 240 through analysis of the data provided by the sensor 211, by the locating device 220 and by the inspection device 230.

As schematically illustrated in figure 10, where the X schematically shows a detected defect, the use of the central radial line 51 as position reference makes it possible to precisely define the position of each defect with respect to the position reference in terms of angular distances α. This advantageously makes it possible to provide reports on the quality control having data that are homogeneous and comparable to carry out analyses (for example statistical) also for tyres of different models.

The output device 250 advantageously comprises software and/or hardware and/or firmware elements configured to provide in output data relative to the detected production defects and to their position with respect to the position reference. For example, the output device 250 can comprise a screen.

According to the quality control method of the invention, the position reference is located through recognition of the mark 5, by identifying the lateral line(s) 52, 53 and then the central radial line 51, by which the position reference is located.

The presence of the lateral line(s) as well as the central radial line advantageously allows the locating device 220 to clearly distinguish the mark 5 from possible other radial linear marks already present on the tyre. The lateral lines, positioned on at least one side of the central radial line, also act as warning for the locating device 220 to forewarn the position reference actually consisting of the central radial line, allowing it to be centred automatically with respect to the central radial line 51.

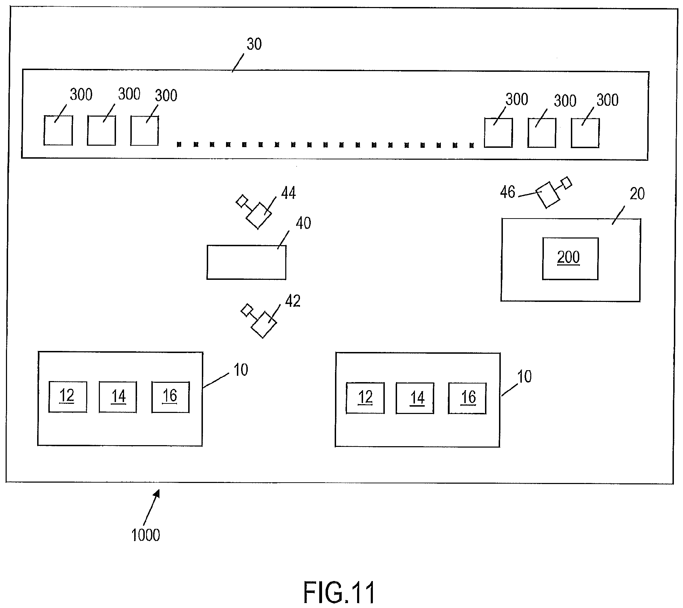

Figure 11 schematically shows a plant 1000 for producing tyres for vehicle wheels according to an embodiment of the invention.

The plant 1000 comprises L green tyres building lines 10, with L≥1 (in the figures, as an example, L=2), a moulding and vulcanization line 30 of the green tyres, K storage areas 40 with K≥1 (in the figures, as an example, K=1); at least three transfer devices 42, 44 and 46 and a quality control line 20.

The K storage areas 40 are adapted to store the green tyres built in the building lines 10.

The at least three transfer devices 42, 44 and 46 are respectively adapted to transfer the built green tyres from the building lines 10 to the K storage areas 40, to transfer the green tyres from the K storage areas 40 to the moulding and vulcanization line 30 and to transfer the moulded and vulcanized tyres from the moulding and vulcanization line 30 to the quality control line 20. Possibly, the moulded and vulcanized tyres from the moulding and vulcanization line 30 can be stored in a suitable storage area (not illustrated) waiting to be transferred to the quality control line 20.

The at least three transfer devices 42, 44 and 46 can be robotized arms, preferably anthropomorphous.

Each building line 10 preferably comprises a carcass structures building line 12, a crown structures building line 14 and a green tyre shaping and assembling station 16, adapted to shape the carcass structure and to assemble it to the crown structure.

The moulding and vulcanization line 30 of the green tyres comprises a plurality of vulcanizers 300 comprising a corresponding plurality of moulds (not shown).

In vulcanizers 300 a vulcanization and moulding step of the green tyres coming from the building lines 10 is carried out.

Preferably, the moulds are configured to shape the tyres according to predefined geometries and tread patterns.

According to the invention, the moulds of the plurality of vulcanizers 300 are configured so as to imprint the mark 5 on at least one sidewall, preferably both of the sidewalls, of all of the tyres produced in the plant 1000.

The quality control line 20 comprises at least one workstation 200 (in the figures, as an example, a single workstation 200 is shown) for the quality control of the tyres produced in the plant 1000.

For the structural and functional characteristics of the workstation 200 reference is made to what has been described above with reference to figure 9.

The moulded and vulcanized tyres, coming from the moulding and vulcanization line 30, are transferred, for example through the transfer device 46, to the at least one workstation 200 of the quality control line 20. In such a station, the tyres are analysed to detect possible production defects and the detected defects are located with respect to the position reference represented by the central radial line 51 of the mark 5.

Preferably, the moulds of the plurality of vulcanizers 300 are configured so as to imprint the same mark 5 in all of the tyres produced in the plant 1000. Preferably, the mark 5 is identical in all of the tyres in terms of shape and/or size.

The use of the same specific mark 5 as position reference advantageously makes it possible to implement the quality control of the tyres in the quality control line 20 using a single methodology and a single locating device of the position reference for all of the tyres produced in the plant 1000.

Preferably, the moulds are configured so as to imprint the mark 5 in the same position (circumferential and radial), in all of the tyres of the same model produced in the plant 1000.

The mark 5 thus provides a unique position reference in the analysis of the defects of the tyres that makes it possible to compare and relate the defects identified on different tyres of the same model. In this way, it is possible to carry out in-depth analyses on the detected defects and, for example, to identify the cause of each defect as a function of its position with respect to the position reference. For example, the presence of the same production defect, detected in the same position with respect to the position reference for a certain number of tyres, can be indicative of a defect in a mould of the moulding and vulcanization line 30 of the production plant 1000. The presence, on the other hand, of the same production defect, detected in different positions with respect to the position reference for a certain number of tyres, can for example be indicative of a defect in the green tyre built in the building line 10 of the production plant 1000.

In a preferred embodiment of the plant 1000, the L building lines 10 of green tyres are configured to build green tyres according to different models. In this embodiment, the moulds of the plurality of vulcanizers 300 are advantageously configured so as to imprint the same mark 5 in all of the tyres produced in the plant 1000, irrespective of the model (including sizes) of the tyres produced. Preferably, the mark 5 is identical in terms of shape and, possibly, also in terms of size, irrespective of the model of the tyres.

The mark 5 thus provides a unique position reference irrespective of the model of tyre. This advantageously makes it possible to implement the quality control of the tyres in the at least one workstation 200 of the quality control line 20 using a single methodology and a single locating device of the position reference for all of the tyres produced in the plant 1000, also in the case of production of different models of tyre.

The invention, in its various aspects, therefore enables to implement in a simple way an automatic quality control of tyres at industrial-scale, using a single methodology and a single locating device of the position reference, irrespective of the model of tyre analysed each time. The invention, in its various aspects, also enables to carry out the quality control of the tyres with reliability and repeatability and to produce reports with data that are homogeneous and comparable also for tyres of different models. Moreover, in one of its preferred embodiments in which the mark is imprinted on both the sidewalls of the tyre, the invention advantageously makes it possible to define two symmetrical position references for detections carried out on both the sidewalls of the same tyre.

## Claims

1. Method for controlling the quality of a tyre (1) for vehicle wheels comprising:
- locating a position reference in a marking on a sidewall (2) of said tyre (1);
- inspecting said tyre (1) to search for production defects;
- determining the position of each detected production defect with respect to said position reference;
**characterized in that** said marking comprises a specific mark (5) that either:
- consists of a first radial line (53), a second radial line (51) and a third radial line (52), wherein said first radial line (53) and said third radial line (52) are positioned, respectively, at the two sides of the second radial line (51), are symmetrical to one another with respect to said second radial line (51), and are radial lines with a shorter length L_{L} than the length L_{C} of the second radial line (51), each of said first radial line (53), second radial line (51) and third radial line (52) being arranged on a plane comprising the rotation axis of the tyre; or
- comprises a first line (53), a second radial line (51) and a third line (52), said first line (53) and said third line (52) being positioned, respectively, at the two sides of the second radial line (51) and being symmetrical to one another with respect to said second radial line (51), wherein said first line (53) and said third line (52) are open polygonal chains, or open curved lines; or
- comprises a plurality of first radial lines (53ᵢ) at one side of a second radial line (51) and a plurality of third radial lines (52ᵢ) at another side of the second radial line (51), and wherein the plurality of first radial lines (53ᵢ) and the plurality of third radial lines (52ᵢ) are symmetrical to one another with respect to said second radial line (51) and have a shorter length than the length of the second radial line (51), the length of the plurality of first and third radial lines increasing going away from the second radial line (51),
and **in that** locating said position reference comprises:
- identifying said specific mark (5) by detecting said first line (53) or said plurality of first radial lines (53ᵢ), said second radial line (51) and said third line (52) or said plurality of third radial lines (52ᵢ),
- said second radial line (51) defining the position reference.

2. Method according to claim 1, comprising an exploration in the circumferential direction of the surface of said sidewall (2) of the tyre (1), adapted to provide data representative of said surface, wherein locating said position reference, inspecting said tyre (1) and determining said position of each production defect, are carried out through processing of said data representative of said surface.

3. Tyre (1) for vehicle wheels having a marking in at least one sidewall (2), said marking comprising a mark (5) suitable as position reference to determine the position of production defects possibly identified in the tyre (1) during a quality control, **characterized in that** said mark (5) either:
- consists of a first radial line (53), a second radial line (51) and a third radial line (52), wherein said first radial line (53) and said third radial line (52) are positioned, respectively, at the two sides of the second radial line (51), are symmetrical to one another with respect to said second radial line (51), and are radial lines with a shorter length L_{L} than the length Lc of the second radial line (51), each of said first radial line (53), second radial line (51) and third radial line (52) being arranged on a plane comprising the rotation axis of the tyre; or
- comprises a first line (53), a second radial line (51) and a third line (52), said first line (53) and said third line (52) being positioned, respectively, at the two sides of the second radial line (51) and being symmetrical to one another with respect to said second radial line (51), wherein said first line (53) and said third line (52) are open polygonal chains, or open curved lines; or
- comprises a plurality of first radial lines (53ᵢ) at one side of a second radial line (51) and a plurality of third radial lines (52ᵢ) at another side of the second radial line (51), and wherein the plurality of first radial lines (53ᵢ) and the plurality of third radial lines (52ᵢ) are symmetrical to one another with respect to said second radial line (51) and have a shorter length than the length of the second radial line (51), the length of the plurality of first and third radial lines increasing going away from the second radial line (51).

4. Tyre (1) according to claim 3, wherein said marking is positioned on both sidewalls (2) of the tyre (1) so that the second radial line (51) lies for the two sidewalls (2) on two radial planes having at most an angular phase shift of less than about 2°.

5. Tyre (1) according to any of claims 3 to 4, wherein said open polygonal chains are substantially V shaped with vertex positioned towards the second radial line (51); or wherein said open curved lines have convexity facing towards the second radial line (51).

6. Tyre (1) according to any of claims 3 to 5, wherein said open curved lines are substantially an arc of circle.

7. Tyre (1) according to any one of claims 3 to 6, wherein said mark (5) provides a unique position reference irrespective of the model of the tyre (1).

8. Plant (1000) for producing tyres (1) for vehicle wheels comprising:
- a quality control line (20) that provides for at least one workstation (200) comprising an inspection device (230) configured to inspect moulded and vulcanized tyres to search for production defects;
wherein said at least one workstation (200) also comprises:
- a locating device (220) configured to identify in each moulded and vulcanized tyre a specific mark (5) of a marking and to locate a position reference;
- a positioning device (240) configured to determine the position of each detected production defect by the inspection device (230) with respect to the position reference located by the locating device (220),
**characterized in that** said marking comprises a specific mark (5) that either:
- consists of a first radial line (53), a second radial line (51) and a third radial line (52) wherein said first radial line (53) and said third radial line (52) are positioned, respectively, at the two sides of the second radial line (51), are symmetrical to one another with respect to said second radial line (51), and are radial lines with a shorter length L_{L} than the length Lc of the second radial line (51), each of said first radial line (53), second radial line (51) and third radial line (52) being arranged on a plane comprising the rotation axis of the tyre; or
- comprises a first line (53), a second radial line (51) and a third line (52), said first line (53) and said third line (52) being positioned, respectively, at the two sides of the second radial line (51) and being symmetrical to one another with respect to said second radial line (51), wherein said first line (53) and said third line (52) are open polygonal chains, or open curved lines; or
- comprises a plurality of first radial lines (53ᵢ) at one side of a second radial line (51) and a plurality of third radial lines (52ᵢ) at another side of the second radial line (51), and wherein the plurality of first radial lines (53ᵢ) and the plurality of third radial lines (52ᵢ) are symmetrical to one another with respect to said second radial line (51) and have a shorter length than the length of the second radial line (51), the length of the plurality of first and third radial lines increasing going away from the second radial line (51);
and **in that** said locating device (220) is configured to identify the specific mark (5) by:
- detecting said first line (53) or said plurality of first radial lines (53ᵢ), said second radial line (51), and said third line (52) or said plurality of third radial lines (52ᵢ),
- said second radial line (51) defining the position reference.

9. Plant (1000) according to claim 8, comprising a moulding and vulcanizing line (30) comprising a plurality of vulcanizers (300) comprising respective moulds configured to imprint said marking on said at least one sidewall of the tyres (1).

10. Plant (1000) according to claim 9, wherein the moulds are configured to imprint the same marking on all tyres (1) produced in the plant (1000), irrespective of the model of the tyres (1).

## Patentansprüche

1. Verfahren zur Kontrolle der Qualität eines Reifens (1) für Fahrzeugräder, wobei das Verfahren umfasst:
- Lokalisieren einer Positionsreferenz in einer Markierung an einer Seitenwand (2) des Reifens (1);
- Inspizieren des Reifens (1), um Produktionsfehler zu suchen;
- Bestimmen der Position jedes erfassten Produktionsfehlers in Bezug auf die Positionsreferenz;
**dadurch gekennzeichnet, dass** die Markierung eine spezifische Kennzeichnung (5) umfasst, die entweder:
- aus einer ersten radialen Linie (53), einer zweiten radialen Linie (51) und einer dritten radialen Linie (52) besteht, wobei
die erste radiale Linie (53) und die dritte radiale Linie (52) jeweils zu beiden Seiten der zweiten radialen Linie (51) positioniert sind, in Bezug auf die zweite radiale Linie (51) symmetrisch zueinander sind und radiale Linien mit einer kürzeren Länge L_{L} als die Länge L_{C} der zweiten radialen Linie (51) sind, wobei jede der ersten radialen Linie (53), der zweiten radialen Linie (51) und der dritten radialen Linie (52) an einer Ebene angeordnet sind, welche die Drehachse des Reifens umfasst; oder
- eine erste Linie (53), eine zweite radiale Linie (51) und eine dritte Linie (52) umfasst, wobei die erste Linie (53) und die dritte Linie (52) jeweils zu beiden Seiten der zweiten radialen Linie (51) positioniert sind und in Bezug auf die zweite radiale Linie (51) symmetrisch zueinander sind, wobei die erste Linie (53) und die dritte Linie (52) offene Polygonketten oder offene gekrümmte Linien sind; oder
- eine Vielzahl von ersten radialen Linien (53ᵢ) auf einer Seite einer zweiten radialen Linie (51) und eine Vielzahl von dritten radialen Linien (52ᵢ) auf einer weiteren Seite der zweiten radialen Linie (51) umfasst,
und wobei die Vielzahl von ersten radialen Linien (53ᵢ) und die Vielzahl von dritten radialen Linien (52ᵢ) in Bezug auf die zweite radiale Linie (51) zueinander symmetrisch sind und eine kürzere Länge als die Länge der zweiten radialen Linie (51) aufweisen, wobei die Länge der Vielzahl von ersten und dritten radialen Linien von der zweiten radialen Linie (51) wegführend zunimmt,
und dass das Lokalisieren der Positionsreferenz umfasst:
- Identifizieren der spezifischen Kennzeichnung (5) durch Erfassen der ersten Linie (53) oder der Vielzahl von ersten radialen Linien (53ᵢ), der zweiten radialen Linie (51) und der dritten Linie (52) oder der Vielzahl von dritten radialen Linien (52ᵢ), und
- wobei die zweite radiale Linie (51) die Positionsreferenz definiert.

2. Verfahren nach Anspruch 1, umfassend eine Untersuchung in der Umfangsrichtung der Oberfläche der Seitenwand (2) des Reifens (1), die dazu geeignet ist, Daten zu liefern, welche die Oberfläche darstellen, wobei das Lokalisieren der Positionsreferenz, das Inspizieren des Reifens (1) und das Bestimmen der Position jedes Produktionsfehlers durch Verarbeiten der Daten erfolgen, welche die Oberfläche darstellen.

3. Reifen (1) für Fahrzeugräder mit einer Markierung in zumindest einer Seitenwand (2), wobei die Markierung eine Kennzeichnung (5) umfasst, die als Positionsreferenz geeignet ist, um die Position von Produktionsfehlern zu bestimmen, die gegebenenfalls in dem Reifen (1) während einer Qualitätskontrolle identifiziert werden, **dadurch gekennzeichnet, dass** die Kennzeichnung (5) entweder:
- aus einer ersten radialen Linie (53), einer zweiten radialen Linie (51) und einer dritten radialen Linie (52) besteht, wobei
die erste radiale Linie (53) und die dritte radiale Linie (52) jeweils zu beiden Seiten der zweiten radialen Linie (51) positioniert sind, in Bezug auf die zweite radiale Linie (51) symmetrisch zueinander sind und radiale Linien mit einer kürzeren Länge L_{L} als die Länge L_{C} der zweiten radialen Linie (51) sind, wobei jede der ersten radialen Linie (53), der zweiten radialen Linie (51) und der dritten radialen Linie (52) an einer Ebene angeordnet sind, welche die Drehachse des Reifens umfasst; oder
- eine erste Linie (53), eine zweite radiale Linie (51) und eine dritte Linie (52) umfasst, wobei die erste Linie (53) und die dritte Linie (52) jeweils zu beiden Seiten der zweiten radialen Linie (51) positioniert sind und in Bezug auf die zweite radiale Linie (51) symmetrisch zueinander sind, wobei die erste Linie (53) und die dritte Linie (52) offene Polygonketten oder offene gekrümmte Linien sind; oder
- eine Vielzahl von ersten radialen Linien (53ᵢ) auf einer Seite einer zweiten radialen Linie (51) und eine Vielzahl von dritten radialen Linien (52ᵢ) auf einer weiteren Seite der zweiten radialen Linie (51) umfasst, und wobei die Vielzahl von ersten radialen Linien (53ᵢ) und die Vielzahl von dritten radialen Linien (52ᵢ) in Bezug auf die zweite radiale Linie (51) zueinander symmetrisch sind und eine kürzere Länge als die Länge der zweiten radialen Linie (51) aufweisen, wobei die Länge der Vielzahl von ersten und dritten radialen Linien von der zweiten radialen Linie (51) wegführend zunimmt.

4. Reifen (1) nach Anspruch 3, wobei die Markierung an beiden Seitenwänden (2) des Reifens (1) positioniert wird, so dass die zweite radiale Linie (51) für die zwei Seitenwände (2) an zwei radialen Ebenen liegt, mit einer Winkelphasenverschiebung von höchstens weniger als etwa 2°.

5. Reifen (1) nach einem der Ansprüche 3 bis 4, wobei die offenen Polygonketten im Wesentlichen V-förmig sind, mit einem Scheitelpunkt, der zu der zweiten radialen Linien (51) hin positioniert ist; oder wobei die offenen gekrümmten Linien eine Konvexität aufweisen, die zu der zweiten radialen Linie (51) hin weist.

6. Reifen (1) nach einem der Ansprüche 3 bis 6, wobei die offenen gekrümmten Linien im Wesentlichen ein Kreisbogen sind.

7. Reifen (1) nach einem der Ansprüche 3 bis 6, wobei die Kennzeichnung (5) eine eindeutige Positionsreferenz vorsehen, unabhängig von dem Modell des Reifens (1).

8. Anlage (1000) zur Herstellung von Reifen (1) für Fahrzeugräder, wobei die Anlage Folgendes umfasst:
- eine Qualitätskontrolllinie (20), die zumindest eine Arbeitsstation (200) umfassend eine Inspektionseinrichtung (230) vorsieht, die dazu ausgestaltet ist, geformte und vulkanisierte Reifen zu inspizieren, um nach Produktionsfehlern zu suchen;
wobei die zumindest eine Arbeitsstation (200) auch umfasst:
- eine Lokalisierungsvorrichtung (220), die dazu ausgestaltet ist, in jedem geformten und vulkanisierten Reifen eine spezifische Kennzeichnung (5) einer Markierung zu identifizieren und eine Positionsreferenz zu lokalisieren;
- eine Positioniereinrichtung (240), die dazu ausgestaltet ist, die Position eines jeden durch die Inspektionseinrichtung (230) erfassten Produktionsfehlers in Bezug auf die durch die Lokalisierungsvorrichtung (220) lokalisierte Positionsreferenz zu bestimmen,
**dadurch gekennzeichnet, dass** die Markierung eine spezifische Kennzeichnung (5) umfasst, die entweder:
- aus einer ersten radialen Linie (53), einer zweiten radialen Linie (51) und einer dritten radialen Linie (52) besteht, wobei
die erste radiale Linie (53) und die dritte radiale Linie (52) jeweils zu beiden Seiten der zweiten radialen Linie (51) positioniert sind, in Bezug auf die zweite radiale Linie (51) symmetrisch zueinander sind und radiale Linien mit einer kürzeren Länge L_{L} als die Länge L_{C} der zweiten radialen Linie (51) sind, wobei jede der ersten radialen Linie (53), der zweiten radialen Linie (51) und der dritten radialen Linie (52) an einer Ebene angeordnet sind, welche die Drehachse des Reifens umfasst; oder
- eine erste Linie (53), eine zweite radiale Linie (51) und eine dritte Linie (52) umfasst, wobei die erste Linie (53) und die dritte Linie (52) jeweils zu beiden Seiten der zweiten radialen Linie (51) positioniert sind und in Bezug auf die zweite radiale Linie (51) symmetrisch zueinander sind, wobei die erste Linie (53) und die dritte Linie (52) offene Polygonketten oder offene gekrümmte Linien sind; oder
- eine Vielzahl von ersten radialen Linien (53ᵢ) auf einer Seite einer zweiten radialen Linie (51) und eine Vielzahl von dritten radialen Linien (52ᵢ) auf einer weiteren Seite der zweiten radialen Linie (51) umfasst, und wobei die Vielzahl von ersten radialen Linien (53ᵢ) und die Vielzahl von dritten radialen Linien (52ᵢ) in Bezug auf die zweite radiale Linie (51) zueinander symmetrisch sind und eine kürzere Länge als die Länge der zweiten radialen Linie (51) aufweisen, wobei die Länge der Vielzahl von ersten und dritten radialen Linien von der zweiten radialen Linie (51) wegführend zunimmt;
und dass die Lokalisierungseinrichtung (220) dazu ausgestaltet ist, die spezifische Kennzeichnung (5) zu identifizieren, indem:
- sie die erste Linie (53) oder die Vielzahl von ersten radialen Linien (53ᵢ), die zweite radiale Linie (51) und die dritte Linie (52) oder die Vielzahl von dritten radialen Linien (52ᵢ) erfasst,
- wobei die zweite radiale Linie (51) die Positionsreferenz definiert.

9. Anlage (1000) nach Anspruch 8, umfassend eine Formungs- und Vulkanisierlinie (30) umfassend eine Vielzahl von Vulkanisiervorrichtungen (300) umfassend jeweilige Formen, die dazu ausgestaltet sind, die Markierung auf zumindest eine Seitenwand der Reifen (1) einzuprägen.

10. Anlage (1000) nach Anspruch 9, wobei die Formen dazu ausgestaltet sind, dieselbe Markierung auf alle in der Anlage (1000) produzierten Reifen (1) einzuprägen, unabhängig von dem Modell der Reifen (1).

## Revendications

1. Procédé pour contrôler la qualité d'un pneu (1) pour des roues de véhicule comprenant le fait :
- de localiser une référence de position dans un marquage sur un flanc (2) dudit pneu (1) ;
- d'inspecter ledit pneu (1) pour chercher des défauts de production ;
- de déterminer la position de chaque défaut de production détecté par rapport à ladite référence de position ;
**caractérisé en ce que** ledit marquage comprend une marque spécifique (5) qui :
- est constituée d'une première ligne radiale (53), d'une deuxième ligne radiale (51) et d'une troisième ligne radiale (52), dans lequel
ladite première ligne radiale (53) et ladite troisième ligne radiale (52) sont positionnées, respectivement, au niveau des deux côtés de la deuxième ligne radiale (51), sont symétriques l'une à l'autre par rapport à ladite deuxième ligne radiale (51), et sont des lignes radiales ayant une longueur L_{L} inférieure à la longueur L_{c} de la deuxième ligne radiale (51), chacune de ladite première ligne radiale (53), de ladite deuxième ligne radiale (51) et de ladite troisième ligne radiale (52) étant agencée sur un plan comprenant l'axe de rotation du pneu ; ou
- comprend une première ligne (53), une deuxième ligne radiale (51) et une troisième ligne (52), ladite première ligne (53) et ladite troisième ligne (52) étant positionnées, respectivement, au niveau des deux côtés de la deuxième ligne radiale (51) et étant symétriques l'une à l'autre par rapport à ladite deuxième ligne radiale (51), où ladite première ligne (53) et ladite troisième ligne (52) sont des chaînes polygonales ouvertes ou des lignes incurvées ouvertes ; ou
- comprend une pluralité de premières lignes radiales (53ᵢ) au niveau d'un côté d'une deuxième ligne radiale (51) et une pluralité de troisièmes lignes radiales (52ᵢ) au niveau d'un autre côté de la deuxième ligne radiale (51), et où la pluralité de premières lignes radiales (53ᵢ) et la pluralité de troisièmes lignes radiales (52ᵢ) sont symétriques les unes aux autres par rapport à ladite deuxième ligne radiale (51) et ont une longueur inférieure à la longueur de la deuxième ligne radiale (51), la longueur de la pluralité de premières et troisièmes lignes radiales augmentant en s'éloignant de la deuxième ligne radiale (51),
et **en ce que** la localisation de ladite référence de position comprend :
- l'identification de ladite marque spécifique (5) en détectant ladite première ligne (53) ou ladite pluralité de premières lignes radiales (53ᵢ), ladite deuxième ligne radiale (51) et ladite troisième ligne (52) ou ladite pluralité de troisièmes lignes radiales (52ᵢ),
- ladite deuxième ligne radiale (51) définissant la référence de position.

2. Procédé selon la revendication 1, comprenant une exploration dans la direction circonférentielle de la surface dudit flanc (2) du pneu (1), adaptée pour fournir des données représentant ladite surface, où la localisation de ladite référence de position, l'inspection dudit pneu (1) et la détermination de ladite position de chaque défaut de production, sont réalisées par le traitement desdites données représentant ladite surface.

3. Pneu (1) pour roues de véhicule ayant un marquage dans au moins un flanc (2), ledit marquage comprenant une marque (5) appropriée comme référence de position pour déterminer la position de défauts de production éventuellement identifiés dans le pneu (1) pendant le contrôle qualité, **caractérisé en ce que** ladite marque (5) :
- est constituée d'une première ligne radiale (53), d'une deuxième ligne radiale (51) et d'une troisième ligne radiale (52), dans lequel
ladite première ligne radiale (53) et ladite troisième ligne radiale (52) sont positionnées, respectivement, au niveau des deux côtés de la deuxième ligne radiale (51), sont symétriques l'une à l'autre par rapport à ladite deuxième ligne radiale (51), et sont des lignes radiales ayant une longueur L_{L} inférieure à la longueur L_{c} de la deuxième ligne radiale (51), chacune de ladite première ligne radiale (53), de ladite deuxième ligne radiale (51) et de ladite troisième ligne radiale (52) étant agencée sur un plan comprenant l'axe de rotation du pneu ; ou
- comprend une première ligne (53), une deuxième ligne radiale (51) et une troisième ligne (52), ladite première ligne (53) et ladite troisième ligne (52) étant positionnées, respectivement, au niveau des deux côtés de la deuxième ligne radiale (51) et étant symétriques l'une à l'autre par rapport à ladite deuxième ligne radiale (51), où ladite première ligne (53) et ladite troisième ligne (52) sont des chaînes polygonales ouvertes ou des lignes incurvées ouvertes ; ou
- comprend une pluralité de premières lignes radiales (53ᵢ) au niveau d'un côté d'une deuxième ligne radiale (51) et une pluralité de troisièmes lignes radiales (52ᵢ) au niveau d'un autre côté de la deuxième ligne radiale (51), et où la pluralité de premières lignes radiales (53ᵢ) et la pluralité de troisièmes lignes radiales (52ᵢ) sont symétriques les unes aux autres par rapport à ladite deuxième ligne radiale (51) et ont une longueur inférieure à la longueur de la deuxième ligne radiale (51), la longueur de la pluralité de premières et troisièmes lignes radiales augmentant en s'éloignant de la deuxième ligne radiale (51).

4. Pneu (1) selon la revendication 3, dans lequel ledit marquage est positionné sur les deux flancs (2) du pneu (1) de sorte que la deuxième ligne radiale (51) se trouve pour les deux flancs (2) sur deux plans radiaux ayant au plus un déphasage angulaire inférieur à environ 2°.

5. Pneu (1) selon l'une des revendications 3 et 4, dans lequel lesdites chaînes polygonales ouvertes sont essentiellement en forme de V avec un sommet positionné vers la deuxième ligne radiale (51) ; ou dans lequel lesdites lignes incurvées ouvertes ont une convexité tournée vers la deuxième ligne radiale (51).

6. Pneu (1) selon l'une des revendications 3 à 5, dans lequel lesdites lignes incurvées ouvertes sont essentiellement un arc de cercle.

7. Pneu (1) selon l'une quelconque des revendications 3 à 6, dans lequel ladite marque (5) fournit une référence de position unique quel que soit le modèle du pneu (1).

8. Installation (1000) pour produire des pneus (1) pour des roues de véhicule comprenant :
- une chaîne de contrôle qualité (20) qui fournit au moins un poste de travail (200) comprenant un dispositif d'inspection (230) configuré pour inspecter des pneus moulés et vulcanisés afin de chercher des défauts de production ;
dans laquelle ledit au moins un poste de travail (200) comprend également :
- un dispositif de localisation (220) configuré pour identifier dans chaque pneu moulé et vulcanisé une marque spécifique (5) d'un marquage et pour localiser une référence de position ;
- un dispositif de positionnement (240) configuré pour déterminer la position de chaque défaut de production détecté par le dispositif d'inspection (230) par rapport à la référence de position localisée par le dispositif de localisation (220),
**caractérisée en ce que** ledit marquage comprend une marque spécifique (5) qui :
- est constituée d'une première ligne radiale (53), d'une deuxième ligne radiale (51) et d'une troisième ligne radiale (52), dans laquelle
ladite première ligne radiale (53) et ladite troisième ligne radiale (52) sont positionnées, respectivement, au niveau des deux côtés de la deuxième ligne radiale (51), sont symétriques l'une à l'autre par rapport à ladite deuxième ligne radiale (51), et sont des lignes radiales ayant une longueur L_{L} inférieure à la longueur L_{c} de la deuxième ligne radiale (51), chacune de ladite première ligne radiale (53), de ladite deuxième ligne radiale (51) et de ladite troisième ligne radiale (52) étant agencée sur un plan comprenant l'axe de rotation du pneu ; ou
- comprend une première ligne (53), une deuxième ligne radiale (51) et une troisième ligne (52), ladite première ligne (53) et ladite troisième ligne (52) étant positionnées, respectivement, au niveau des deux côtés de la deuxième ligne radiale (51) et étant symétriques l'une à l'autre par rapport à ladite deuxième ligne radiale (51), où ladite première ligne (53) et ladite troisième ligne (52) sont des chaînes polygonales ouvertes ou des lignes incurvées ouvertes ; ou
- comprend une pluralité de premières lignes radiales (53ᵢ) au niveau d'un côté d'une deuxième ligne radiale (51) et une pluralité de troisièmes lignes radiales (52ᵢ) au niveau d'un autre côté de la deuxième ligne radiale (51), et où la pluralité de premières lignes radiales (53ᵢ) et la pluralité de troisièmes lignes radiales (52ᵢ) sont symétriques les unes aux autres par rapport à ladite deuxième ligne radiale (51) et ont une longueur inférieure à la longueur de la deuxième ligne radiale (51), la longueur de la pluralité de premières et troisièmes lignes radiales augmentant en s'éloignant de la deuxième ligne radiale (51) ;
et **en ce que** ledit dispositif de localisation (220) est configuré pour identifier la marque spécifique (5) par :
- la détection de ladite première ligne (53) ou de ladite pluralité de premières lignes radiales (53ᵢ), de ladite deuxième ligne radiale (51) et de ladite troisième ligne (52) ou de ladite pluralité de troisièmes lignes radiales (52ᵢ),
- ladite deuxième ligne radiale (51) définissant la référence de position.

9. Installation (1000) selon la revendication 8, comprenant une chaîne de moulage et de vulcanisation (30) comprenant une pluralité de vulcanisateurs (300) comprenant des moules respectifs configurés pour imprimer ledit marquage sur ledit au moins un flanc des pneus (1).

10. Installation (1000) selon la revendication 9, dans laquelle les moules sont configurés pour imprimer le même marquage sur tous les pneus (1) produits dans l'installation (1000), quel que soit le modèle des pneus (1) .
